# EUROPÄISCHE PATENTANMELDUNG

(11) **EP 3 722 191 A1**
(43) Veröffentlichungstag der Anmeldung: **14.10.2020**
(21) Anmeldenummer: 20020160.6
(22) Anmeldetag: 08.04.2020
(51) Int. Cl.: B62K 13/08, B62K 19/34, B62K 13/00

(54) **UMWANDELBARES ZWEIRAD**

(30) Priorität: 10.04.2019 DE 102019002631
(71) Anmelder: Pascher + Heinz GmbH, 81829 München (DE)
(72) Erfinder: Pascher, Reinhard, 85540 Salmdorf/Haar (DE); Schirrmacher, Tao, 80339 München (DE)
(74) Vertreter: von Bülow, Tam

(57) **Zusammenfassung**

Das umwandelbare Zweirad kann ohne Werkzeug von einem Laufrad zu einem Fahrrad umgebaut werden, indem eine Tretkurbeleinheit (13) in zwei Aufnahmen (10,12) des Rahmens (1) eingehängt und verriegelt wird. Die Tretkurbeleinheit (13) hat ein Befestigungselement (19), das formschlüssig mit den zwei Aufnahmen (10,12) am Rahmen (1) verbindbar ist, wobei das Befestigungselement (19) aus zwei über ein Schwenklager (27) miteinander verbundenen Elementen (19,30) besteht, zwischen denen das Tretlager (26) eingespannt ist, wobei die beiden Elemente (19,30) über einen Exzenterhebel (32,34) gegeneinander verspannt sind und der Exzenterhebel (32,34) in seiner Länge verstellbar ist.

## Beschreibung

Die Erfindung betrifft ein umwandelbares Zweirad gemäß dem Oberbegriff des Patentanspruches 1.

Die GB 598 235 A zeigt ein umwandelbares Zweirad mit einem Rahmen, zwei an dem Rahmen drehbar gelagerten Rädern, von denen eines mit einer Lenkstange lenkbar ist. An dem Rahmen sind zwei Aufnahmen angebracht sowie eine Tretkurbeleinheit, die ein Befestigungselement aufweist, das formschlüssig mit den zwei Aufnahmen am Rahmen verbindbar ist. Beide Aufnahmen weisen die Form einer zylindrischen Stange auf, die durch Stege in einem Abstand zum Rahmen gehalten sind. Das Befestigungselement weist im Bereich eines Endes eine Vertiefung auf, die an die Form der zylindrischen Stange angepasst ist. An dem Befestigungselement ist ein Tretlager für Tretkurbeln angebracht.

Die US 583 022 A zeigt ein umwandelbares Fahrrad mit einer abnehmbaren Tretkurbeleinheit, die über zwei Aufnahmen am Rahmen angebracht ist. Eine erste Aufnahme ist in einem horizontalen Bereich des Rahmens und eine zweite Aufnahme an einem vertikal geneigten Bereich des Rahmens angebracht.

Unwandelbare Fahrräder mit abnehmbarer Tretkurbeleinheit sind auch aus der US 1 907 645 A, FR 533 655 A, US 2018 0 050 760 A1 und US 2014 0 084 564 A1 bekannt.

Die DE 32 444 661 A1 beschreibt ein umwandelbares Zweirad, das als Tretroller, Laufrad oder Fahrrad nutzbar ist. In der Grundfunktion als Tretroller mit zwei an einem Rahmen drehbar gelagerten Rädern und einer Lenkstange kann durch Hinzufügen eines höhenverstellbaren und schwenkbaren Sattels und durch Höhenverstellung des Lenkers ein Laufrad vom Typ einer Draisine geschaffen und durch weiteres Hinzufügen eines Tretkurbelantriebs ein Fahrrad realisiert werden. Der An- und Abbau der entsprechenden Teile benötigt allerdings den Einsatz von Werkzeugen.

Aufgabe der Erfindung ist es, das eingangs genannte umwandelbare Zweirad dahingehend zu verbessern, dass es in einfacher Weise ohne Vorkenntnisse schnell und insbesondere ohne Werkzeug umgewandelt werden kann.

Diese Aufgabe wird durch die im Patentanspruch angegebenen Merkmale gelöst. Vorteilhafte Ausgestaltungen und Weiterbildungen der Erfindung sind den Unteransprüchen zu entnehmen.

Grundidee der Erfindung ist es eine Tretkurbeleinheit durch einfaches Einhängen am Rahmen des Zweirades zu befestigen. Wird dabei eine Antriebskette oder ein Treibriemen angebracht, ist mit wenigen Handgriffen aus einem Laufrad ein Fahrrad realisiert.

Bei einem Ausführungsbeispiel der Erfindung sind am Rahmen zwei Aufnahmen angebracht und es ist eine Tretkurbeleinheit vorgesehen, die ein Befestigungselement aufweist, das formschlüssig mit den zwei Aufnahmen am Rahmen verbindbar ist. Die Tretkurbeleinheit enthält dabei die üblichen Tretkurbeln, die mittels einer Welle miteinander verbunden sind sowie ein Antriebsrad, das ein Kettenzahnrad oder ein Treibriemenrad sein kann, und das genannte Befestigungselement, das in die genannten Aufnahmen eingesetzt werden kann.

Nach einer Weiterbildung der Erfindung ist eine der Aufnahmen an einem horizontalen Bereich des Rahmens und die andere Aufnahme an einem vertikal geneigten Bereich des Rahmens angebracht, sodass horizontal und vertikal wirkende Kräfte der Tretkurbeleinheit in den Rahmen geleitet werden.

Nach einer anderen Weiterbildung der Erfindung weisen beide Aufnahmen die Form einer Stange auf, die jeweils durch Stege in einem Abstand zum Rahmen gehalten ist. Somit kann das Befestigungselement zwischen den Stangen und dem Rahmen stabil gehalten werden.

Nach einer anderen Ausführungsform der Erfindung ist mindestens eine Aufnahme eine Öffnung im Rahmen, in die das Befestigungselement eingehängt werden kann.

Das Befestigungselement ist im Bereich eines Endes so ausgebildet, dass es am Rahmen angebracht werden kann. Dies kann mittels der genannten Öffnung im Rahmen erfolgen oder auch an der genannten Stange. In letzterem Fall weist das Befestigungselement im Bereich eines Endes eine Vertiefung auf, deren Form an die Stange angepasst ist. Die Vertiefung ist dabei so, dass das Befestigungselement an der Stange eingehängt und dort geschwenkt werden kann. Am gegenüberliegenden Bereich des Befestigungselementes ist eine Ausnehmung vorgesehen, die so dimensioniert ist, dass sie die Stange der anderen Aufnahme aufnehmen kann. In dieser Ausnehmung ist ein verschiebbarer Riegel vorgesehen, der zwischen den Rahmen und die Stange einschiebbar ist, um das Befestigungselement am Rahmen zu verriegeln. Dieser Riegel kann auch durch eine Feder in eine Schließstellung vorgespannt sein.

Generell sind die Aufnahmen am Rahmen so angeordnet, dass nach dem Einhängen des Befestigungselementes am ersten Einhängepunkt, das Befestigungselement so geschwenkt wird, dass sich der Abstand des Antriebsrades Tretkurbeleinheit zum angetriebenen Rad vergrößert, sodass sich eine Antriebskette oder Zahnriemen spannt.

Vorzugsweise weist der Riegel ein Auflaufschräge auf, um ein besseres und einfaches Spannen des Befestigungselements zu gewährleisten.

Weitere Vorteile und Einzelheiten der Erfindung ergeben sich aus der nachfolgenden detaillierteren Beschreibung anhand der Zeichnung. Es zeigt:
Figur 1 eine Seitenansicht des Zweirades der Erfindung ausgebildet als Laufrad;
Figur 2 eine Seitenansicht des Zweirades der Erfindung ausgebildet als Fahrrad;
Figur 3 eine vergrößerte Teilansicht der Tretkurbeleinheit beim Heranführen an den Rahmen;
Figur 4 eine Ansicht ähnlich Figur 3 in einer weiteren Zwischenstellung;
Figur 5 eine vergrößerte teilweise geschnittene Ansicht des Befestigungselementes der Erfindung; und
Figur 6 den fertig eingebauten Zustand, wobei lediglich der Vorsprung 23 des Riegels 22 noch in der Öffnungsstellung ist.
Figur 7 eine schematische Seitenansicht eines weiteren Ausführungsbeispiels einer Tretkurbeleinheit;
Figur 8 eine perspektivische Schrägansicht der Tretkurbeleinheit der Figur 7.
Figur 9 eine Seitenansicht der Tretkurbeleinheit der Figuren 7 und 8 im zerlegten Zustand.

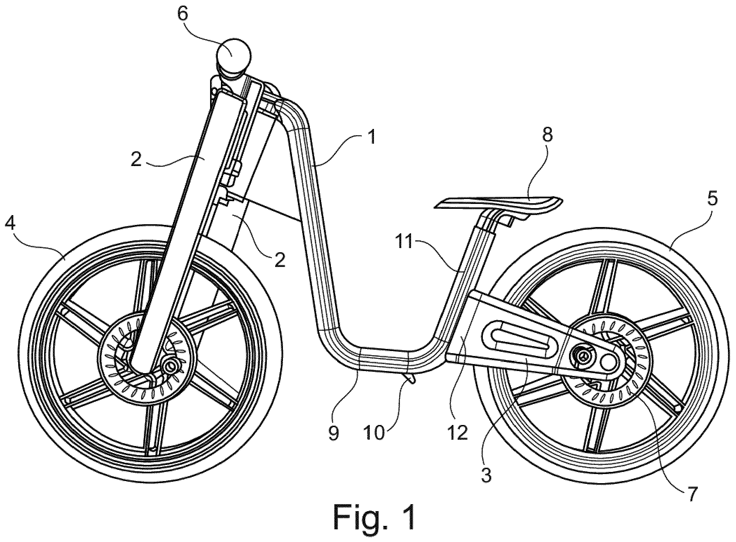

Figur 1 zeigt zunächst im Wesentlichen ein herkömmliches Laufrad mit einem Rahmen 1, einer Vorderradgabel 2, einer Hinterradschwinge 3, einem Vorderrad 4 und einem Hinterrad 5. Weiter weist das Laufrad den üblichen Lenker 6, Bremsscheiben 7 und einen Sattel 8 auf.

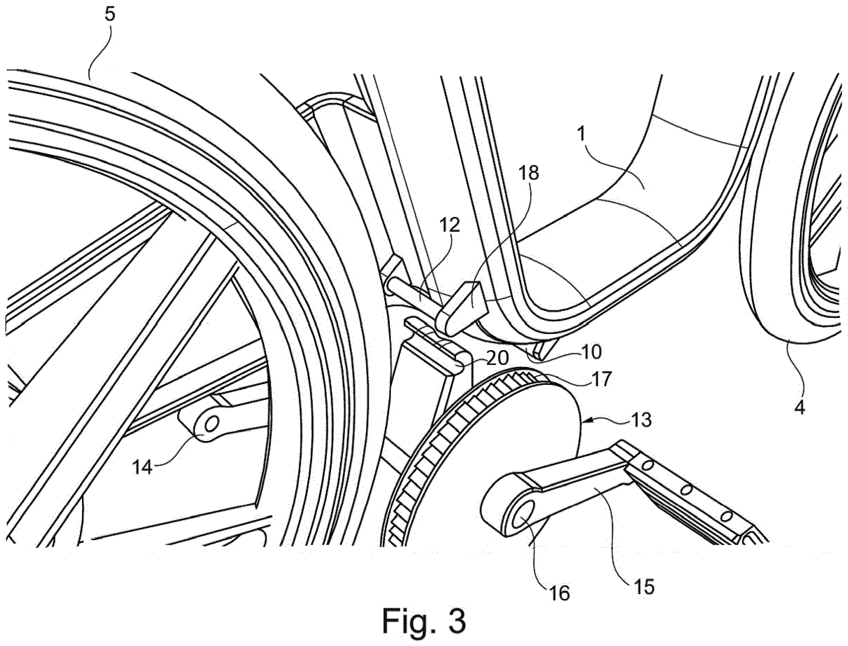

Für die Realisierung der Erfindung sind am unteren horizontalen Bereich 9 des Rahmens 1 eine vordere Aufnahme 10 und am hinteren etwas vertikal geneigten Bereich 11 des Rahmens 1 eine zweite Aufnahme 12 vorgesehen, wobei letztere in Fig 1 nicht dargestellt ist, weil sie in der Abbildung durch die Hinterradschwinge 3 verdeckt ist. Die zweite Aufnahme 12 ist in Fig. 3 zu sehen.

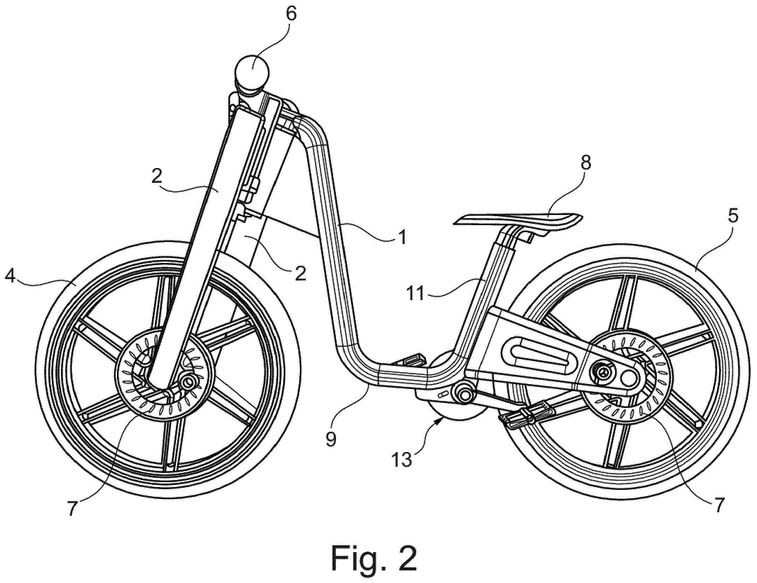

Fig. 2 verdeutlicht, dass an diese beiden Aufnahmen 10 und 12 bei Umgestaltung des Laufrades zu einem Fahrrad eine Tretkurbeleinheit 13 angebracht wird. Selbstverständlich muss auch noch eine Antriebskette oder ein Antriebsriemen zwischen der Tretkurbeleinheit 13 und dem angetrieben Hinterrad 5 aufgelegt werden. Auch sei darauf hingewiesen, dass bei einem bevorzugten Ausführungsbeispiel der Erfindung nur eine Hinterradschwinge 3 vorgesehen ist und zwar auf der Seite die der Tretkurbeleinheit 13 abgewandt ist. Damit kann die Tretkurbeleinheit 13 samt Antriebskette oder Antriebsriemen besonders einfach angebaut werden.

Figur 3 verdeutlicht den Anbau der Tretkurbeleinheit 13 am Rahmen 1. Die Tretkurbeleinheit 13 enthält die üblichen Tretkurbeln 14 und 15, die an einer gemeinsamen Welle 16 angebracht sind. Weiterhin hat sie ein Antriebsrad 17, das drehfest mit der Welle 16 verbunden ist. Schließlich ist ein Befestigungselement 19 mit der Welle 16 verbunden und zwar so, dass es an der Welle 16 geschwenkt werden kann. Das Befestigungselement 19 enthält auch, wie weiter unten erläutert wird, die üblichen Tretager eines Fahrradantriebes.

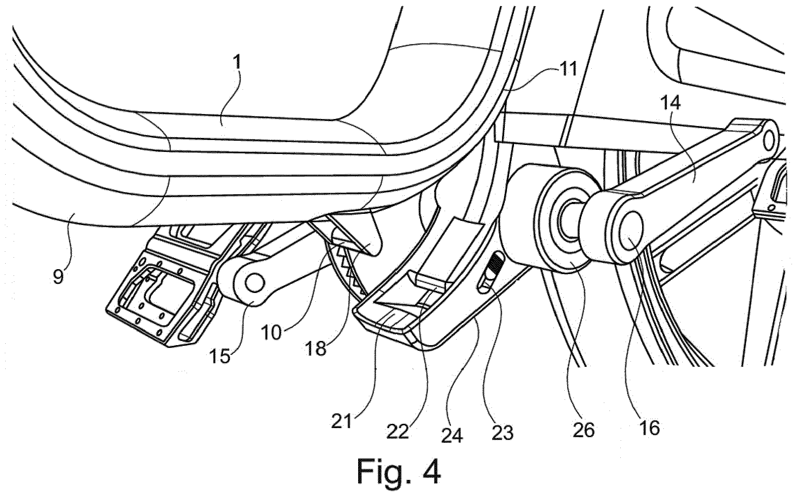

Zum Einbau der Tretkurbeleinheit 13 wird das Befestigungselement 19 zwischen den hinteren vertikalen Bereich 11 des Rahmens 1 und den Stange 12 geschoben so dass die Vertiefung 20 die Stange 12 übergreift. Anschließend kann das Befestigungselement 19 zusammen mit der gesamten Tretkurbeleinheit 13 um die Achse der Stange 12 geschwenkt werden, sodass sich das andere Ende des Befestigungselementes der vorderen Aufnahme 10 nähert, wie in Figur 4 dargestellt.

In Figur 4 ist das Befestigungselement mit seiner Vertiefung 20 bereits in die zweite Stange 12 eingehängt und in Richtung zum Vorderrad 4 hin verschwenkt. Das Befestigungselement 19 hat an seinem anderen, der Vertiefung 20 gegenüberliegenden Ende ein Ausnehmung 21, die so groß ist, dass sie die vorderen Stange 10 vollständig aufnehmen kann. Die zum Rahmen 1 weisende Seite des Befestigungselement 19 ist an die Form des Rahmens angepasst, sodass das Befestigungselement 19 sich an die Kontur der Unterseite des Rahmens anschmiegt. Angrenzend an die Ausnehmung 21 ist ein verschiebbarer Riegel 22, der in den Spalt zwischen der Stange 10 der vorderen Aufnahme und der Unterseite des Rahmens 1 eingreifen kann, um das Befestigungselement 19 am Rahmen 1 zu fixieren. Zum Verschieben des Riegels 22 sind seitliche Vorsprünge 23 vorgesehen, die eine Öffnung 23 der Seitenwand hindurch ragen und so von außen zugänglich sind. Zur Fixierung wird die Tretkurbeleinheit 13 zusammen mit der Befestigungselementen 19 um die Achse der zweiten Stange 12 verschwenkt, bis das Befestigungselement 19 am Rahmen 1 anliegt und die vordere Aufnahme 10 vollständig in der Ausnehmung 21 zu liegen kommt. Sodann wird der Riegel 22 verschoben, um die gesamte Einheit am Rahmen 1 zu fixieren.

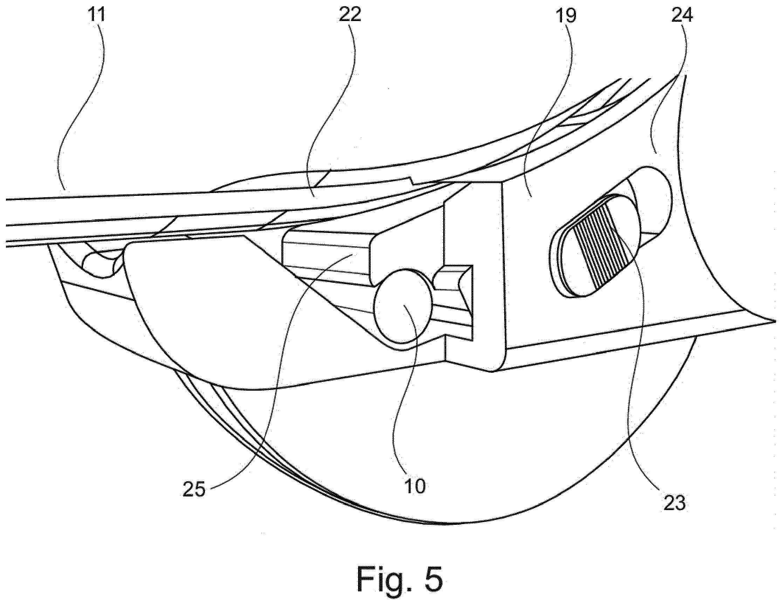

Aus Figur 4 und insbesondere aber auch aus Figur 5 ist noch zu erkennen, dass der Riegel 22 an seiner Vorderkante eine Schräge 25 aufweist, die beim Befestigen ein Aufgleiten am Gegenelement wie zB an der Stange 10 oder einem Teil des Rahmens erleichtert.

Figur 5 zeigt noch einmal deutlicher das Befestigungselement 19 im eingebauten Zustand, bei dem der Riegel 22 so weit vorgeschoben ist, dass er die Stange 10 übergreift. Wie aus Figur 5 zu erkennen ist, ist eine vordere Spitze des Riegels 22 so lang, dass sie die Stange 10 im eingeschobenen Zustand über eine vertikale Mittellinie hinausgehend umgreift, sodass ein unfreiwilliges Lösen des Riegels 22 verhindert ist. Eine elastische Verspannung des Riegels 22 und des Befestigungselements 19 ist dabei durch die Materialeigenschaften des Befestigungselements 19 und des Riegels 22 gegeben. Zusätzlich kann der Riegel 22 auch durch eine Feder in die Schließstellung gedrückt werden, wodurch die Schließstellung gesichert ist.

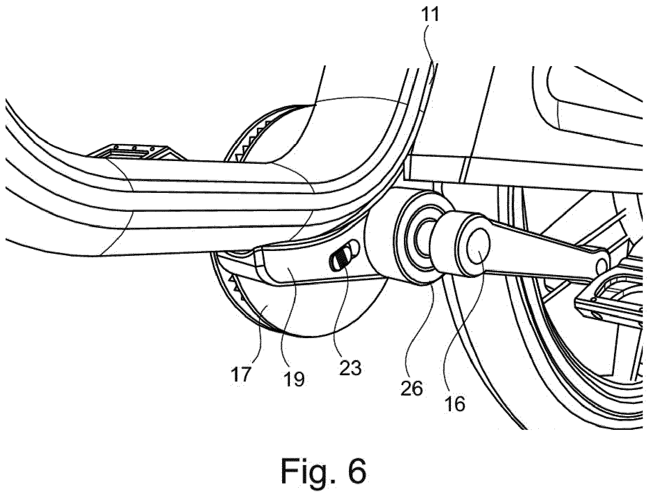

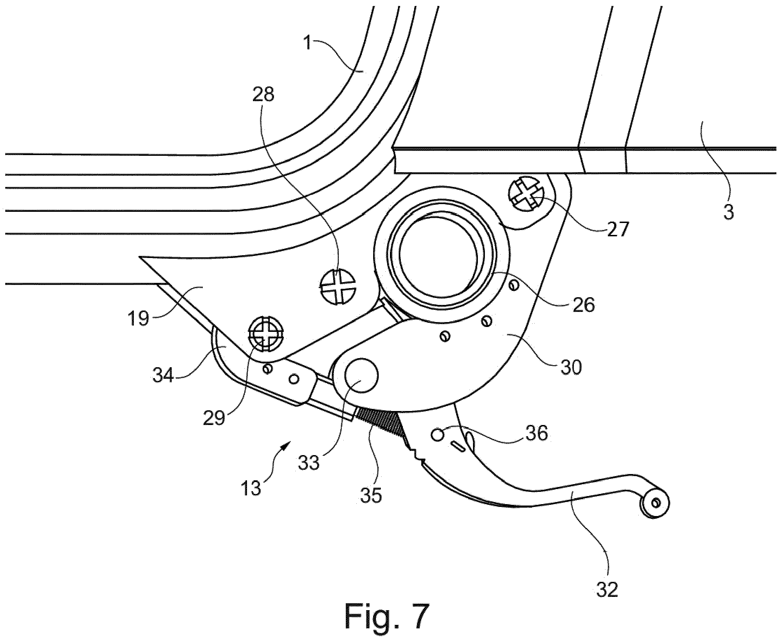

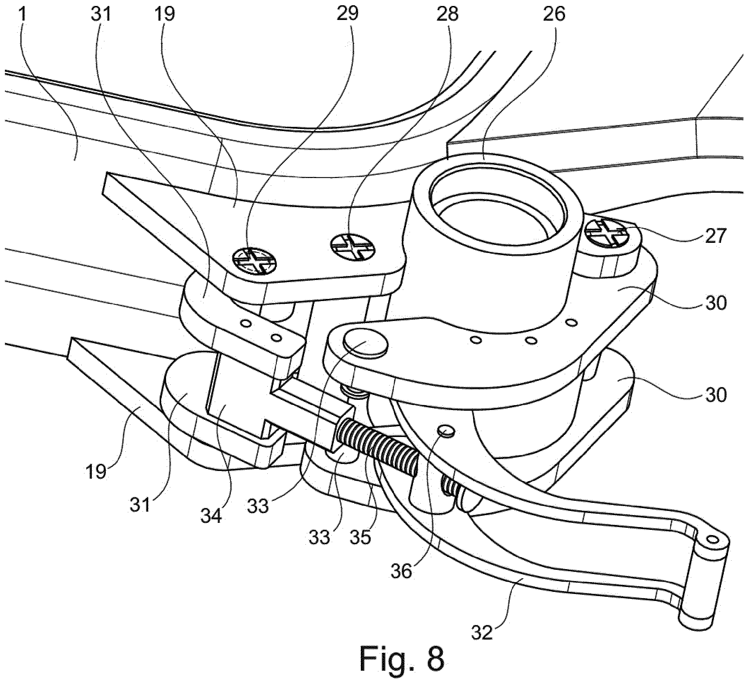

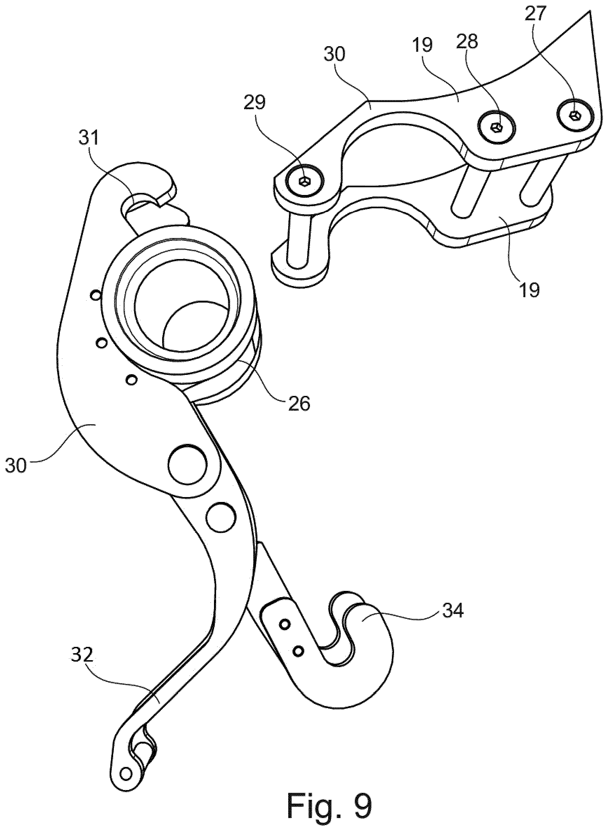

Generell ist bei dem Ausführungsbeispiel der Figuren 7-9 die Tretkurbeleinheit öffenbar, so dass das Tretlager 26 separat entnommen werden kann. Die Tretkurbeleinheit hat das Befestigungselement 19, das in gleicher Weise wie bei den Ausführungsbeispielen der Figuren 2-6 am Rahmen 1 befestigt werden kann. Das Befestigungselement 19 besteht aus zwei parallel zueinander angeordneten Scheiben, die durch Schraubbolzen 27, 28 und 29 miteinander verbunden sind. Das Befestigungselement 19 hat eine etwa halbkreisförmige Ausnehmung, in die das Tretlager 26 eingesetzt ist. Ein zweites Befestigungselement 30 hat ebenfalls eine etwa halbkreisförmige Ausnehmung für das Tretlager. Es kann mit Haken 31 an dem Schraubbolzen 29 eingehängt und um dessen Achse geschwenkt werden.

An dem den Haken 31 gegenüberliegenden Ende des zweiten Befestigungselementes 30 ist ein Schwenklager 33 für einen Spannhebel 32 vorgesehen. Exzentrisch zu dem Schwenklager 33 ist an dem Spannhebel 32 mittels eines Schwenklagers 36 ein Haken 34 angebracht, der in den Schraubbolzen 27 eingreifen kann. Die Länge dieses Haken 34 ist über ein Schraubgewinde 35 einstellbar. Wird der Haken 34 in den Schraubbolzen 27 eingehängt und anschließend der Spannhebel 32 in Richtung zu dem zweiten Befestigungselement 30 hin verschwenkt, so werden die beiden Befestigungselemente 19 und 30 gegeneinander und damit gegen das Tretlager 26 verspannt. Das Tretlager 26 ist dann am Rahmen 1 fixiert. Die Anordnung der Schraubbolzen 27 des Tretlagers 36 und der Schwenklager 33 relativ zueinander ist so gestaltet, dass der Spannhebel 32 in der Schließstellung eine sogenannte Übertotpunktlage einnimmt, so dass die gesamte Einheit auch fest verriegelt ist.

## Patentansprüche

1. Umwandelbares Zweirad mit einem Rahmen (1), zwei an dem Rahmen drehbar gelagerten Rädern (4, 5), von denen eines mit einer Lenkstange (6) lenkbar ist, wobei am Rahmen (1) zwei Aufnahmen (10,12) angebracht sind und eine Tretkurbeleinheit (13) vorgesehen ist, die ein Befestigungselement (19) aufweist, das formschlüssig mit den zwei Aufnahmen (10,12) am Rahmen (1) verbindbar ist, **dadurch gekennzeichnet, dass** das Befestigungselement (19) aus zwei über ein Schwenklager (27) miteinander verbundenen Elementen (19,30) besteht, zwischen denen das Tretlager (26) eingespannt ist, wobei die beiden Elemente (19,30) über einen Exzenterhebel (32,34) gegeneinander verspannt sind und dass der Exzenterhebel (32,34) in seiner Länge verstellbar ist.

2. Umwandelbares Zweirad nach Anspruch 1, **dadurch gekennzeichnet, dass** eine erste Aufnahme (10) an einem horizontalen Bereich (9) des Rahmens (1) eine zweite Aufnahme (12) an einem vertikalen geneigten Bereich (11) des Rahmens (1) angebracht ist.

3. Umwandelbares Zweirad nach Anspruch 1 oder 2, **dadurch gekennzeichnet, dass** beide Aufnahmen (10,12) die Form einer zylindrischen Stange aufweisen, die durch die Stege (18) in einem Abstand zum Rahmen (1) gehalten sind.

4. Umwandelbares Zweirad nach Anspruch 3, **dadurch gekennzeichnet, dass** das Befestigungselement (19) im Bereich eines Endes eine Vertiefung (20) aufweist, die an die Form der zylindrischen Stange (12) angepasst ist.

5. Umwandelbares Zweirad nach Anspruch 4, **dadurch gekennzeichnet, dass** das Befestigungselement (19) im Bereich eines zweiten Endes eine Ausnehmung (21) aufweist, die hinsichtlich Größe und Form zur Aufnahme der vorderen Stange (10) ausgebildet ist, wobei das Befestigungselement (19) einen verschiebbaren Riegel (22) aufweist, der zwischen den Rahmen (1) und der Stange (10) einschiebbar ist.

6. Umwandelbares Zweirad nach Anspruch 5, **dadurch gekennzeichnet, dass** der Riegel (22) an seiner zur Stange (10) weisenden Kante eine Auflaufschräge (25) aufweist.

7. Umwandelbares Zweirad nach Anspruch 6, **dadurch gekennzeichnet, dass** der Riegel (22) durch eine Feder in eine Schließstellung vorgespannt ist.

8. Umwandelbares Zweirad nach einem der Ansprüche 1-7 **dadurch gekennzeichnet, dass** an dem Befestigungselement (19) Tretlager (26) für Tretkurbeln (14,15) angebracht sind.
